# EUROPÄISCHE PATENTSCHRIFT

(11) **EP 1 722 108 B1**
(45) Veröffentlichungstag und Bekanntmachung des Hinweises auf die Patenterteilung: **27.11.2013**
(21) Anmeldenummer: 06008474.6
(22) Anmeldetag: 25.04.2006
(51) Int. Cl.: F15B 7/00, F15B 21/04

(54) **Hydraulische Betätigungseinrichtung eines Kraftfahrzeuges mit einem varaiblen Drosselglied**
Hydraulic actuation device of a rod vehicle with a variable throttle element
Dispositif hydraulique d'actionnement pour véhicule avec un élément d'étranglement variable

(30) Priorität: 12.05.2005 DE 102005021971
(43) Veröffentlichungstag der Anmeldung: 15.11.2006
(73) Patentinhaber: ZF Friedrichshafen AG, 88046 Friedrichshafen (DE)
(72) Erfinder: Tulaczko, Boleslaw, 97453 Schonungen (DE); Gebauer, Dieter, 97502 Euerbach (DE); Koberstein, Ralf, 97762 Hammelburg (DE); Riess, Thomas, 97437 Hassfurt (DE); Gemeinhardt, André, 97508 Obereuerheim (DE); Morber, Roland, 97633 Sulzfeld (DE)

(56) Entgegenhaltungen:
- DE-A1- 4 338 096
- FR-A- 2 106 937
- GB-A- 753 516
- US-B1- 6 467 392

## Beschreibung

Die Erfindung betrifft eine hydraulische Betätigungseinrichtung einer Kraftfahrzeugkupplung gemäß dem Oberbegriff des unabhängigen Patentanspruchs.

Eine Betätigungseinrichtung mit einem Geber- und einem Nehmerzylinder, welche durch eine fluidbefüllte Druckleitung miteinander verbunden sind und in der zusätzlich ein Drosselglied ausgeführt ist, geht bspw. aus der DE 198 50 323 A1 hervor. In dem dort beschriebenen Beispiel dient das Drosselglied der Vermeidung eines zu schnellen und abrupten Einkuppelns einer Fahrzeugkupplung, insbesondere einer Reibungskupplung, welches beispielsweise durch ein beabsichtigtes sog. Pedalschnalzen oder ein unbeabsichtigtes Abrutschen vom Kupplungspedal und die damit verbundene unkontrollierte Rückstellbewegung eines hydraulischen Kupplungsgeberzylinders hervorgerufen werden kann. Zur Begrenzung der auf diese Weise im Kraftfahrzeugantriebsstrang resultierenden Drehmomentspitzen bewirkt das Drosselglied bei einer derartigen Situation eine Reduzierung der Einrückgeschwindigkeit der Kraftfahrzeugreibungskupplung, wohingegen das Ausrücken der Kupplung ungehindert zügig erfolgen kann. Dieses Verhalten wird erreicht, indem ein in einem Drosselraum durch die Fluidströmung verlagerbarer Drosselkörper in einer Flußrichtung des Fluids den wirksamen Querschnitt des Fluidkanals durch dessen partielles Verschließen verkleinert und somit einen Rückfluß des Fluids beim Einrücken der Kupplung drosselt. Weitere, grundsätzlich nach diesem Wirkprinzip arbeitende Drosselglieder sind mit der DE 43 38 096 A1, der GB 753 516 A und der FR A -2 106 937 (Fig. 1) bekannt geworden.

Es hat sich in der Praxis herausgestellt, dass ein für den Temperaturbereich von etwa -10°C bis ca. + 130°C optimiertes Drosselglied dort zwar wie gewünscht arbeitet, dass jedoch bei niedrigeren Temperaturen, insbesondere im Bereich von ca. -35°C bis ca. - 10°C eine erhebliche, übermäßige Reduzierung der Einrückgeschwindigkeit der Kraftfahrzeugkupplung auftritt. Dadurch kann es bei Anfahr- und Gangwechselvorgängen zu einem Schleifen der Kupplung kommen, wodurch diese einer außerordentlichen Verschleißbelastung unterliegt und andererseits der Fahrkomfort spürbar leidet.

Wenn aber die Drosselstelle andererseits für den genannten niedrigen Temperaturbereich optimiert wird, indem diese mit einem größeren Kanalquerschnitt versehen wird, so erhöht sich in dem oberen Temperaturbereich die Einrückgeschwindigkeit so stark, dass die Kupplung schneller als beabsichtigt eingerückt wird und diese selbst, sowie weitere im Antriebsstrang des Fahrzeuges angeordnete Drehmomentübertragungselemente, bspw. ein Zweimassenschwungrad, beschädigt werden können und/oder der Verbrennungsmotor des Fahrzeuges abgewürgt wird.

Es besteht somit ein Problem bei der Auslegung einer hydraulischen Betätigungseinrichtung hinsichtlich der Erzielung eines für den gesamten Betriebstemperaturbereich eines Kraftfahrzeuges vorgegeben Volumenstromwertes beim Einrücken der Kupplung.

Die US 6 467 392 B1 offenbart einen Lenkungsdämpfer für eine Lenkeinrichtung, welcher ein variables Drosselglied mit einer bereits aus den oben genannten Schriften bekannten Rückstromdrossel kombiniert. Bei niedrigen Temperaturen stellt sich infolge der dabei ansteigenden Fluid-Viskosität eine geringere Fluid-Fließgeschwindigkeit ein, was bei dem Lenkungsdämpfer ebenso zu einer unerwünschten übermäßigen Drosselwirkung führt. Zur Kompensation dieses Effektes wird vorgeschlagen, eine einen Ventilkörper belastende Feder aus einem Formgedächtnismaterial zu fertigen, wodurch bei niedrigen Temperaturen eine Verkürzung der Axiallänge der Feder bewirkt wird und der Ventilkörper dadurch von seinem Sitz an einem ersten Ventilkörper abhebt und einen weiteren Fluidkanal freigibt. Dadurch wird die Dämpfungsfunktion in diesem Zustand abgeschaltet.

Eine hydraulische Betätigungseinrichtung gemäß dem Oberbegriff des unabhängigen Patentanspruchs ist bereits mit der FR A 2106937 bekanntgeworden. Dabei ist innerhalb des Fluidkanals ein in Strömungsrichtung zum Nehmerzylinder mittels einer Feder belastetes scheibenförmiges Ventilelement vorgesehen, welches bei einem Einkuppelvorgang, das heißt bei einer Fluidströmung vom Nehmerzylinder zum Geberzylinder, bei niedrigen Temperetauren und einer damit verbundenen hohen Fluid-Viskosität von dessen Ventilsitz abheben kann und den wirksamen Fluldkanalquerschnitt vergrößert.

Es ist von dem genannten Stand der Technik ausgehend die Aufgabe der Erfindung, eine alternative hydraulische Betätigungseinrichtung einer Kraftfahrzeugkupplung bereitzustellen, welche einer Temperaturabhängigkeit des Fluid-Volumenstroms zumindest in einer Strömungsrichtung entgegenwirken kann und welche gleichzeitig auf eine einfache Art und Weise eine Drosselung eines von einem Nehmerzylinder zu einem Geberzylinder erfolgenden Fluidrückstroms ermöglicht.

Die Aufgabe wird durch eine hydraulische Betätigungseinrichtung eines Kraftfahrzeuges mit einem variablen Drosselglied gemäß Patentanspruch 1 gelöst. Vorteilhafte Ausgestaltungen und Weiterbildungen der Erfindung sind in den abhängigen Ansprüchen angegeben.

Die Erfinder haben zunächst erkannt, dass die Ursache für die eingangs beschriebene Problematik in der Temperaturabhängigkeit der Viskosität des innerhalb der Betätigungseinrichtung fließenden Fluids, welches üblicherweise eine Bremsflüssigkeit darstellt, und in der dadurch bedingten Volumenstromänderung zu suchen ist. Beispielsweise steigt die Viskosität von Bremsflüssigkeit mit der Bezeichnung "Hydraulan 404" bei einer Temperaturänderung von +130°C auf -35°C etwa um einen Faktor 200 nichtlinear an, wobei die signifikanteste Viskositätsänderung unterhalb des Gefrierpunktes stattfindet.

Gemäß der Erfindung wird eine hydraulische Betätigungseinrichtung mit einem variables Drosselglied vorgeschlagen, welches ein Gehäuse mit einem dadurch verlaufenden Fluidkanal und ein innerhalb des Fluidkanals angeordnetes Ventilelement aufweist. Bei einer infolge einer Temperaturänderung auftretenden Fluid-Viskositätsänderung erfährt das Ventilelement eine Stellkraft, welche eine Lage- oder eine Formänderung des Ventilelementes bewirkt, durch welche dann der Querschnitt des Fluidkanals lokal beeinflusst werden kann. Die Lageänderung des Ventilelementes kann z.B. durch eine Schnapp-, Dreh-, Kippbewegung, eine Verschiebung oder dgl. erfolgen. Zur Ermöglichung einer Formänderung kann das Ventilelement aus einem elastischen Werkstoff bestehen, welcher bei einer Krafteinwirkung reversibel deformiert wird. Der Fluidkanalquerschnitt wird dabei so variiert, dass einer Betragsänderung des Fluid-Volumenstroms aufgrund der Viskositätsänderung entgegengewirkt wird.

Zur Darstellung der Stellkraft wird an dem Ventilelement ein viskositätsabhängiger Druckabfall erzeugt. Ein solches variables Drosselglied hat den Vorteil, dass dieses selbsttätig und ohne zusätzliche Energiezufuhr arbeiten kann.

Die vorgeschlagene Betätigungseinrichtung ist dadurch gekennzeichnet, dass diese eine Rückstromdrossel zur Verminderung eines Rück-Volumenstromes vom Nehmerzylinder zum Geberzylinder gegenüber einem diesem entgegengesetzt gerichteten Hin-Volumenstrom aufweist. Dabei umfasst die Rückstromdrossel einen Drosselraum für ein darin zwischen zwei, durch Anschläge definierten Endlagen infolge der Fluidströmung verlagerbaren Drosselkörper, wobei der Drosselkörper allein oder gemeinsam mit dem Drosselraum Durchlasskanäle aufweist, deren fluiddurchströmter Querschnitt von der eingenommenen Endlage des Drosselkörpers abhängig ist. Mittels der Rückstromdrossel kann das Ausrücken einer Kupplung schneller erfolgen als das Einrücken.

Durch die Wirkung des variablen Drosselgliedes kann die Einrückgeschwindigkeit einer Kraftfahrzeugkupplung beim Auftreten einer ungewollt schnellen Stellbewegung des Geberzylinders bei den eingangs geschilderten Situationen im Wesentlichen unabhängig von der Temperatur auf einen vorbestimmten Grenzwert eingestellt werden. Die Lage- oder Formänderung des Ventilelementes kann bspw. bei einer Strömungsumkehr in dem hydraulischen System wieder rückgängig gemacht werden. Jedoch hat es sich als vorteilhaft erwiesen, wenn das Ventilelement bei einer einwirkenden Stellkraft entgegen der Wirkung einer Rückstellkraft eine von einer Ausgangsform oder einer Ausgangslage ausgehenden Form- oder Lageänderung erfährt.

Die Rückstellkraft des Ventilelementes kann bei vertikaler Anordnung allein durch die Schwerkraft gegeben sein, jedoch erweist es sich in einem Fahrzeug als vorteilhaft, die Rückstellkraft von einem Rückstellmittel zu erzeugen, bspw. von einem Federelement.

Der erforderliche viskositätsabhängige Druckabfall kann in besonders einfacher Weise erzeugt werden, indem das variable Drosselglied einen Fluidkanalabschnitt aufweist, welcher gegenüber demjenigen am Ventilelement eine unterschiedliche Abhängigkeit eines auftretenden Druckabfalls vom Fluid-Volumenstrom aufweist.

Zur Erzeugung eines viskositätsabhängenden Druckabfalls an dem Ventilelement hat es sich als vorteilhaft erwiesen, diesem Ventilelement eine näherungsweise lineare Abhängigkeit des Druckabfalls vom Volumenstrom zu verleihen, indem der dort verlaufende Abschnitt des Fluidkanals beispielsweise als Rohr bzw. Röhrchen ausgeführt ist und weiter einen sich strömungstechnisch davon unterscheidenden Fluidkanalabschnitt mit einer nichtlinearen Abhängigkeit des Druckabfalls vom Volumenstrom auszubilden. Letzterer kann besonders einfach als Blende mit einer näherungsweise quadratischen Abhängigkeit des Druckabfalls vom Volumenstrom ausgeführt sein. Eine Beeinflussung des von dem Fluid durchströmten Kanalquerschnitts kann mit Vorteil dadurch erfolgen, dass das Ventilelement Fluidkanäle aufweist, deren Öffnungszustand von der Lage des Ventilelementes innerhalb des Bewegungsraumes abhängen oder alternativ oder ergänzend gemäß einer weiteren vorteilhaften Variante, indem bei einer Lageänderung des ersten Ventilelementes der Querschnitt eines Fluid-Bypasses zu einem dazu feststehendem Element, z.B. einem Gehäuse, variiert werden kann.

Mit Vorteil wird bei steigender Viskosität durch eine Lageänderung des Ventilelements der Querschnitt des Fluidkanals vergrößert.

Das variable Drosselglied lässt sich noch kompakter darstellen, indem das Ventilelement selbst eine nichtlineare Abhängigkeit des Druckabfalls vom Volumenstrom aufweist. Da innerhalb einer Betätigungseinrichtung üblicherweise ohnehin eine Druckleitung vorgesehen ist, bei der der Druckabfall linear vom Volumenstrom abhängt, ist zur Erzeugung einer strömungsbedingten Stellkraft kein weiteres Funktionselement notwendig.

Eine ebenso vorteilhaftes variables Drosselglied kann bei einer gegenüber dem erstgenannten Prinzip umgekehrten Wirkungsweise erreicht werden, wobei das Ventilelement bei fallender Viskosität eine von einer Ausgangslage ausgehenden Lageänderung erfährt und dabei der Querschnitt des Fluidkanals verringert wird.

Es kann zusätzlich auch zweckmäßig sein, an dem variablen Drosselglied zusätzlich zu einem im Querschnitt variablen Fluidkanalabschnitt eine Fluid-Passage mit einem konstanten Querschnitt auszubilden, die strömungsmäßig parallel zu dem erstgenannten angeordnet ist. Mit der Fluid-Passage kann damit unabhängig von dem variablen Fluidkanalabschnitt ein Mindestvolumenstrom festgelegt werden.

Die Rückstromdrossel und das variable Drosselglied können prinzipiell getrennt voneinander, d.h. auch an unterschiedlichen Funktionselementen ausgeführt werden. Es ergibt sich jedoch eine erhebliche Wirkungsverbesserung, wenn der Drosselraum mit dem Drosselkörper und der Bewegungsraum mit dem Ventilglied einander angrenzend ausgeführt werden, wobei das Ventilelement einen Anschlag für den Drosselkörper bildet. Wenn der Drosselkörper und das Ventilelement mit einem verengtem Rohr als Fluidkanal ausgeführt sind, ergibt sich somit ein kompakte Baueinheit und wegen der strömungsmäßig in Reihe angeordneten verlagerbaren Ventilelemente eine relativ große an diesen angreifende Stellkraft zur Beeinflussung des Fluidkanalquerschnittes.

Das variable Drosselglied kann innerhalb der hydraulischen Betätigungseinrichtung separat, d.h. mit einem separaten Gehäuse, ausgeführt werden. Es bietet sich jedoch zur Reduzierung von Fluidsteckverbindungen und der Erhöhung der Betriebssicherheit an, zumindest ein Element des variablen Drosselgliedes in ein weiteres hydraulisches Funktionselement zu integrieren. Beispielsweise kann das variable Drosselglied ein gemeinsames Gehäuse mit einem Dämpfungsglied oder einem Hydraulikzylinder aufweisen oder es kann das nichtlineare Element, d.h. z.B. die Blende an einem Hydraulikzylinder, einem Dämpfungsglied oder innerhalb der Druckleitung ausgeführt sein. Im Folgenden wird die Erfindung anhand der beiliegenden Zeichnungen beispielhaft erläutert. Es zeigen:
- Fig. 1: eine schematische Darstellung einer hydraulischen Betätigungseinrichtung für eine Kraftfahrzeugkupplung mit einem variablen Drosselglied, welches in einem Dämpfungsglied integriert ist,
- Fig. 2: eine Schnittdarstellung des variablen Drosselgliedes innerhalb des Anschlußbereichs des Dämpfungsgliedes gemäß Fig. 1 in einer ersten Stellung,
- Fig. 3: eine Schnittdarstellung des variablen Drosselgliedes gemäß Fig. 2 in einer zweiten Stellung.

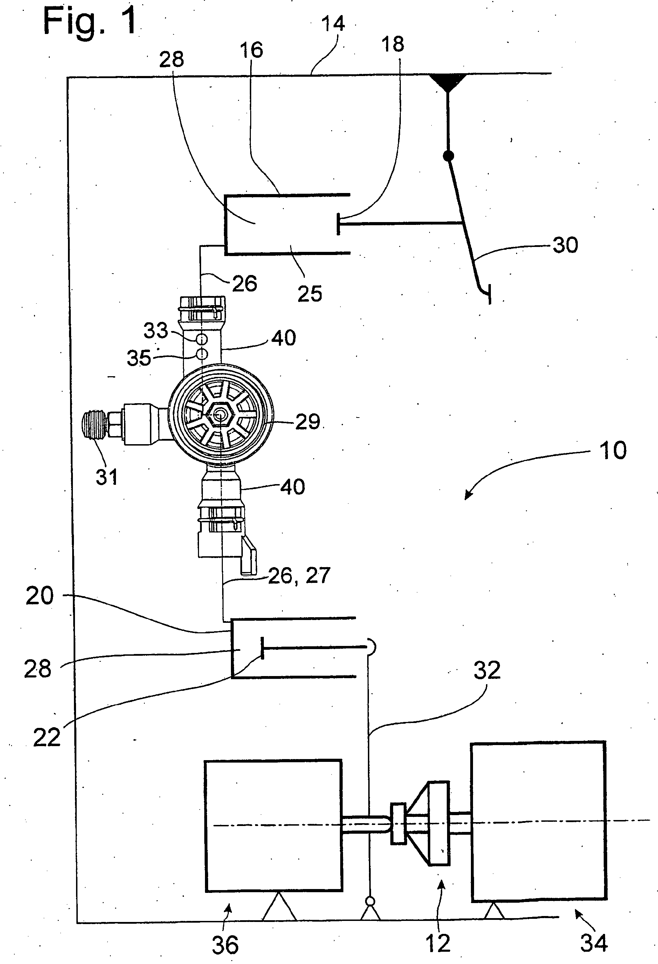

Gemäß Fig. 1 wird schematisch eine hydraulische Betätigungseinrichtung 10 zum Betätigen einer Kraftfahrzeugkupplung 12 gezeigt, welche an einem Chassis 14 eines Kraftfahrzeugs angeordnet ist und wobei ein Geberzylinder 16 mit einem Kolben 18 und ein Nehmerzylinder 20 mit einem Kolben 22 angeordnet sind, die mit einer mit einem Fluid 25 befüllten Druckleitung 26 verbunden sind und einen gemeinsamen Druckraum 28 ausbilden. Innerhalb der hydraulischen Funktionselemente verläuft ein durchgehender Fluidkanal 27. Der Kolben 18 des Geberzylinders 16 kann durch ein Pedal 30 betätigt werden, woraufhin sich der Kolben 22 des Nehmerzylinders 20 verschiebt und eine Kupplungsgabel 32 zum Ausrücken der Kupplung 12 an einem als Verbrennungsmotor 34 ausgebildeten Antriebsaggregat steuert. Die Kupplung 12 ist eingangsseitig mit der Abtriebswelle des Verbrennungsmotors 34 und ausgangsseitig mit einem Schaltgetriebe 36 verbunden. Innerhalb der Hydraulikleitung 26 ist ein Dämpfungsglied 29 zur Dämpfung von Druckpulsationen vorgesehen. Die Betätigungseinrichtung 10 weist weiter ein Entlüftungsventil 31, ein allgemein mit der Bezugsziffer 33 bezeichnetes variables Drosselglied mit einem temperaturveränderlichen bzw. viskositätsabhängigen Drosselquerschnitt und zusätzlich ein Drosselglied 35 mit einem bezüglich der Temperatur festem Drosselquerschnitt auf, welche gemeinsam an dem Dämpfungsglied 29 ausgeführt sind. Das Drosselglied 35 ist als Rückstromdrossel, d.h. als fluidströmungsrichtungsabhängiges Drosselglied ausgebildet und reduziert den Fluid-Volumenstrom beim Einrücken gegenüber demjenigen beim Ausrücken der Kupplung 12. Somit stellt das Drosselglied 35 einen Peak Torque Limiter (PTL) dar. Mit dem variablen Drosselglied 33 kann der Fluid-Volumenstrom in einer Strömungsrichtung, nämlich beim Einrücken der Kupplung 12, wie dieses nachfolgend ausführlich erläutert wird, so eingestellt werden, dass einer viskositätsbedingten Volumenstromänderung entgegengewirkt werden kann. Der prinzipielle Aufbau und die Wirkungsweise des Dämpfungsgliedes 29 und des Entlüftungsventils 31 entsprechen dem Stand der Technik und sind somit dem Fachmann bekannt, so dass dieses im Rahmen der vorliegenden Erfindung keiner weitergehenden Erläuterungen bedarf.

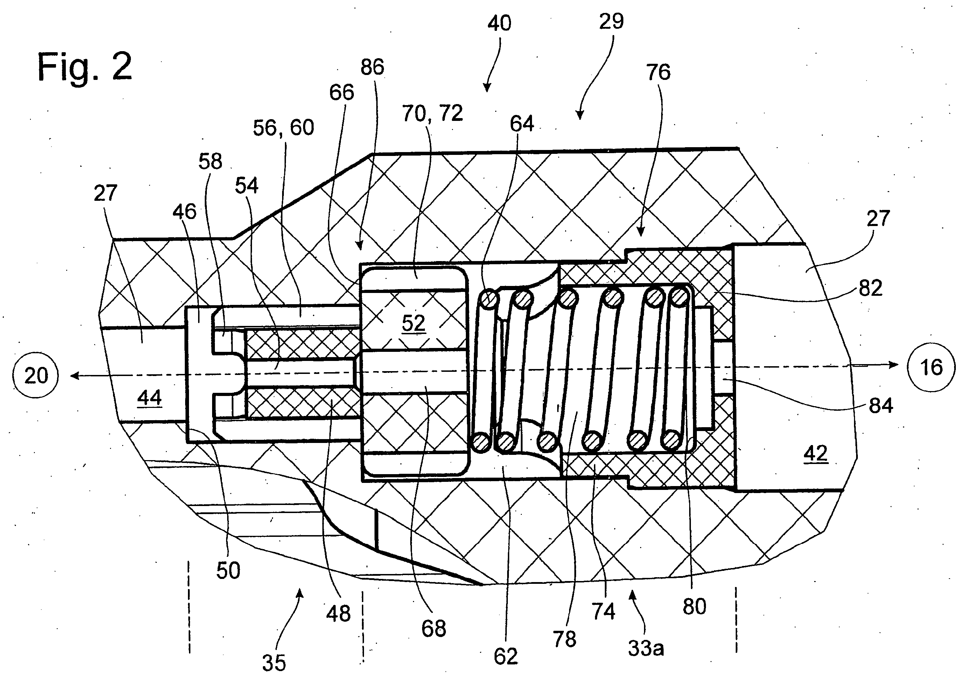

Fig. 2 zeigt einen Anschlussbereich 40 des Dämpfungsgliedes 29 mit einem darin integrierten variablen Drosselglied 33a und mit der Rückstromdrossel 35. Der Anschlussbereich 40 des Dämpfungsgliedes 29, der gleichzeitig ein Gehäuse für die Elemente 33 und 35 bildet, weist eine zylindrische, mehrfach gestufte Durchgangsbohrung 42 auf, durch welche der Fluidkanal 27 verläuft. Vom Hauptkörper des Dämpfungsgliedes 29 aus gesehen, geht ein Fluid-Einlaßkanal 44 in einen durchmesservergrößerten Kanalabschnitt 46 über, der einen Drosselraum 46 für einen Drosselkörper 48 bildet, welcher sich zwischen einem Absatz 50, der einen ersten Anschlag bildet und einem Ventilelement 52, das einen zweiten Anschlag bildet, durch eine Fluidströmung axial verlagern kann. Der Drosselkörper 48 weist zur Führung des Fluids einen zentralen Drosselkanal 54 mit einem trichterförmig erweiterten Endbereich und an der Außenumfangsfläche sowie an der zum Fluid-Einlasskanal 44 weisenden Stirnseite mehrere, axial und radial erstreckende Ausnehmungen 56, 58 auf, die gemeinsam mit der Wandung des Drosselraumes 46 äußere Kanäle 60 für das Fluid bilden, welche in der in Fig. 2 gezeigten Stellung von dem Ventilelement 52 abgedeckt werden und somit verschlossen sind. Der Gesamtquerschnitt der Kanäle 54, 60 am Drosselkörper 48 ist so bemessen, dass dieser mindestens dem Querschnitt des Fluid-Einlaßkanals 44 entspricht.

Das Ventilelement 52 stellt hinsichtlich dessen grundsätzlicher Wirkung ebenfalls eine Drosselstelle dar und ist innerhalb eines gegenüber dem Drosselraum 46 nochmals im Durchmesser vergrößerten Bewegungsraumes 62 angeordnet und kann sich, wie dieses nachfolgend noch erläutert wird, darin entgegen der Wirkung einer Druckfeder 64 axial von einem als Anschlag dienenden weiteren Absatz 66 abheben und in Fig. 2 nach rechts verlagern.

Das Ventilelement 52 umfasst einen zentralen Ventilkanal 68 und an der Außenumfangsfläche eine Mehrzahl von axialen Ausnehmungen 70, welche gemeinsam mit der Wandung des Bewegungsraumes 62 Randkanäle 72 ausbilden. In der in Fig. 2 gezeigten Stellung sind die Randkanäle 72 durch den Absatz 66 linksseitig verschlossen. Der Gesamtquerschnitt der Kanäle 54, 60 am Drosselkörper 48 ist mindestens so groß wie der Querschnitt des Ventilkanals 68 des Ventilelementes 52. Der Bewegungsraum 62 wird an der gegenüberliegenden Seite durch einen Ringkragen 74 einer zylindrischen Hülse 76 begrenzt, welche in den Anschlussbereich 40 eingepresst ist und gleichzeitig innerhalb eines einseitig offenen Aufnahmeraums 78 für die Druckfeder 64 eine Anlagefläche 80 für dieselbe bereitstellt. An einem Boden 82 der Hülse 76 ist eine für das Fluid als Blende 84 wirkende Bohrung 84 ausgeführt.

Die Wirkungsweise der Rückstromdrossel 35 entspricht bei der dargestellten Lage des Ventilelementes 52 am Anschlag 66 derjenigen eines aus dem Stand der Technik bekannten Drosselgliedes. Bei der Betätigung des Geberzylinders 16 wird das in dem Fluidkanal 27 befindliche Fluid in Richtung des Nehmerzylinders 20 verschoben, wobei der Drosselkörper 48 in Fig. 2 innerhalb des Drosselraumes 46 nach links bis an den Anschlag 50 verlagert wird und wobei das Fluid durch den zentralen Drosselkanal 54 und die äußeren Kanäle 60 fließt. Auf diese Weise wird ein zügiges Ausrücken der Kupplung 12 über den gesamten Betriebstemperaturbereich ermöglicht.

Beim Einrücken der Kupplung 12 findet eine Richtungsumkehr des Fluidstromes statt, wodurch sich der Drosselkörper 48 nach rechts bis zur Anlage an das Ventilelement 52 verlagert und dadurch die äußeren Kanäle 60 verschließt und somit den Fluid-Kanalquerschnitt bzw. den Drosselquerschnitt und demzufolge den Volumenstrom reduziert. Auf diese Weise ergibt sich die gewünschte Reduzierung der Einrückgeschwindigkeit gegenüber der Ausrückgeschwindigkeit der Kupplung 12.

In der Strömungsrichtung vom Nehmerzylinder 20 zum Geberzylinder 16 kann das variable Drosselglied 33a aktiviert werden, dessen Wirkungsweise von der Viskosität des Fluids und damit von der Temperatur abhängig ist. Bei Temperaturen oberhalb von ca. -20 bis -10°C, wo eine vergleichsweise geringe Viskosität des Fluids vorliegt, strömt das Fluid aus dem Drosselkanal 54 in den mit diesem fluchtenden Ventilkanal 68 des Ventilelementes 52 ein, durchströmt den Bewegungsraum 62 und verlässt diesen durch die Blende 84, um über die angeschlossene Druckleitung 26 zum Geberzylinder 16 zu gelangen.

Der am Nehmerzylinder 20 in das hydraulische System 10 eingeprägte Fluiddruck wird dabei stufenweise an einem aus dem Drosselkörper 48 und dem Ventilelement 52 gebildeten Rohrwiderstand 86, der Blende 84 und der sich daran anschließenden Druckleitung 26 abgebaut. Jedoch ist infolge der geringen Viskosität der Volumenstrom relativ groß. Die Durchtrittsbereiche an dem Rohrwiderstand 86 und der Blende 84 sind so dimensioniert, dass unter diesen Bedingungen der an der Blende 84 erzielte Druckabfall groß ist gegenüber demjenigen an dem Rohrwiderstand 84 und der Druckleitung 26. Der an dem Rohrwiderstand 86 auftretende Druckabfall erzeugt an diesem eine Gegenkraft zur Feder 64, wobei diese jedoch zu gering ist, um eine Verlagerung der Elemente des Rohrwiderstandes 86 in Richtung zur Blende 84 zu bewirken.

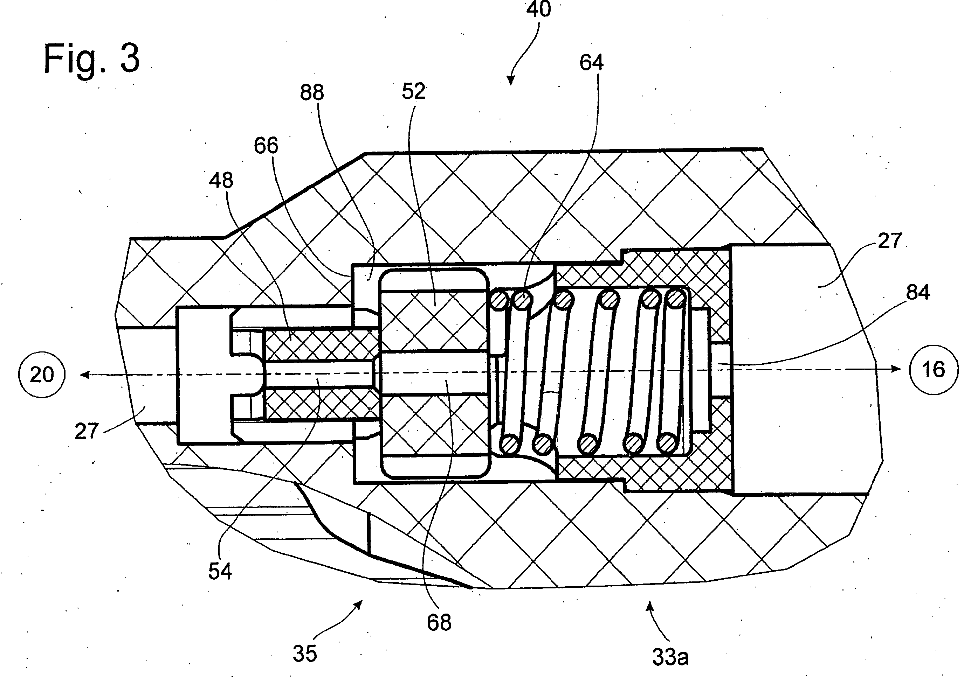

Bei niedrigeren Temperaturen, insbesondere unterhalb -10°C bis -20°C und dem damit einhergehenden markanten Anstieg der Viskosität ergibt sich ein anderes Verhalten des variablen Drosselgliedes 33. Dadurch, dass der Druckabfall an dem Rohrwiderstand 86 und ebenso der Druckleitung 26 proportional zum Volumenstrom und der Viskosität des Fluids ist, während der Druckabfall an der Blende 84 eine quadratische Abhängigkeit vom Volumenstrom aufweist und als viskositätsunabhängig betrachtet werden kann, ergibt sich bei einer Viskositätsänderung an den durchströmten Funktionselementen des hydraulischen Systems 10 gegenüber dem vorgenannten Fall bei gleichem eingeprägten Systemdruck eine andere Verteilung des Druckabbaus. In diesem Fall ist die an der Blende 84 auftretenden Druckdifferenz vergleichsweise gering, während an der Druckleitung 26 und dem Rohrwiderstand 86 eine größere Druckdifferenz auftritt, wodurch die Kraft der Feder 64 überwunden wird und der Drosselkörper 48 gemeinsam mit dem Ventilkörper 52 in Richtung der Blende 84 verlagert werden kann. Dabei hebt, wie dieses in Fig. 3 ersichtlich ist, das Ventilelement 52 von dem Anschlag 66 ab, wodurch sich ein veränderliche Ringspalt 88 ausbilden kann, durch welchen eine zusätzliche Fluidströmung von den äußeren Kanälen 60 zu den Randkanälen 72 und schließlich durch die Öffnung der Blende 84 ermöglicht wird. Die damit erzielte Querschnittserhöhung am Ventilelement 52 führt zu einer Erhöhung des Volumenstroms und dadurch zu einem Ansteigen der Stellgeschwindigkeit des Nehmerzylinders 20, was eine erhöhte Einrückgeschwindigkeit der Kupplung 12 bedeutet, wobei jedoch ein kritischer Wert nicht überschritten wird.

Bei dem Ausführungsbeispiel gemäß der Fig. 2 und 3 wird die Drosselwirkung der Rückstromdrossel 35 zumindest teilweise durch unmittelbare Zusammenwirken mit dem viskositätsabhängigen variablen Drosselglied 33a wieder aufgehoben. Die Rückstromdrossel 35 und das variable Drosselglied 33a können selbstverständlich auch räumlich und funktionell getrennt ausgeführt werden, wobei dem Drosselkörper 48 anstelle des verlagerbaren Anschlags in Form des Ventilelementes 52 ein zweiter ortsfester Anschlag zugeordnet wird und wobei die Drosselwirkung der Rückstromdrossel 35 infolge eines festgelegten Drosselquerschnittes temperaturabhängig ist und die Drosselwirkung des variablen Drosselgliedes 33a infolge deren variablen Drosselquerschnitts von der Temperatur unabhängig ist.

Anstelle bei niedrigen Temperaturen einen Bypass zur Erhöhung des Fluid-Volumenstroms bereitzustellen, ist es auch möglich, den Volumenstrom bei hohen Temperaturen durch Absperren eines Fluiddurchlasses zu reduzieren.

Der Temperaturbereich, in denen eine Lageänderung des Ventilgliedes 52 stattfinden soll, ist durch entsprechende Dimensionierung des variablen Drosselgliedes 33a entsprechend dem verwendeten Fluid und einem gewünschten Verhalten anpassbar.

Somit ist es auch möglich, eine kontinuierliche Verlagerung eines Ventilgliedes in Abhängigkeit von der Fluid-Viskosität und dem Volumenstrom zu realisieren und damit den Einfluss der Viskosität auf die Einrückgeschwindigkeit der Kupplung 12 nahezu vollständig zu kompensieren.

Ein variables Drosselglied 33a kann anstelle mit dem Dämpfungsglied 29 selbstverständlich an einer beliebigen Stelle innerhalb der hydraulische Betätigungseinrichtung 10 angeordnet werden, also bspw. an einem Geber- oder Nehmerzylinder (16, 20) oder als separates Element ausgeführt werden.

Durch eine Baueinheit von Dämpfungsglied 29, Entlüftungsventil 31, Drosselglied 35 und variablen Drosselglied 33a ergibt sich der Vorteil, dass nur ein einziges Gehäuse erforderlich ist, welches leicht als Kunststoffspritzteil gefertigt werden kann. Somit erübrigt sich ein separates Gehäuse oder eine Modifikation eines Nehmer- oder Geberzylinders.

**Bezugszeichenliste**

| | | | |
|---|---|---|---|
| 10 | hydraul. Betätigungseinrichtung | 46 | Drosselraum |
| 12 | Kraftfahrtzeugkupplung | 48 | Drosselkörper |
| 14 | Chassis | 50 | Absatz |
| 16 | Geberzylinder | 52 | Ventilelement |
| 18 | Kolben | 54 | Drosselkanal |
| 20 | Nehmerzylinder | 56, 58 | Ausnehmung |
| 22 | Kolben | 60 | äußere Kanäle |
| 25 | Hydraulikfluid | 62 | Bewegungsraum |
| 26 | Hydraulikleitung | 64 | Druckfeder |
| 27 | Fluidkanal | 66 | Absatz |
| 28 | Druckraum | 68 | Ventilkanal |
| 29 | Dämpfungsglied | 70 | Ausnehmung |
| 30 | Pedal | 72 | Randkanal |
| 31 | Entlüftungsventil | 74 | Ringkragen |
| 32 | Kupplungsgabel | 76 | Hülse |
| 33 | avariables Drosselglied | 78 | Aufnahmeraum |
| 34 | Verbrennungsmotor | 80 | Anlagefläche |
| 35 | Rückstromdrossel | 82 | Boden |
| 36 | Schaltgetriebe | 84 | Blende |
| 40 | Anschlussbereich | 86 | Rohrwiderstand |
| 42 | Durchgangsbohrung | 88 | Ringspalt |
| 44 | Fluid-Einlaßkanal | | |

## Patentansprüche

1. Hydraulische Betätigungseinrichtung einer Kraftfahrzeugkupplung, umfassend:
- ein variables Drosselglied (33a) mit einem Gehäuse (40), durch das ein Fluidkanal (27) verläuft,
- einen Nehmerzylinder (20) und einen Geberzylinder (16),
- ein innerhalb des Fluidkanals (27) angeordnetes Ventilelement (52), wobei an dem Ventilelement (52) bei einer Fluidströmung von einer mit dem Nehmerzylinder (20) in Fluidverbindung bringbaren Seite des Drosselgliedes (33a) zu einer mit dem Geberzylinder (16) in Fluidverbindung bringbaren Seite des Drosselgliedes (33a) ein viskositätsabhängiger Druckabfall und dadurch eine an dem Ventilelement (52) angreifende Stellkraft erzeugt wird, durch welche das Ventilelement (52) eine Form- oder Lageänderung zur lokalen Beeinflussung des Querschnittes des Fluidkanals (27) ausführen und damit einer Änderung eines Fluid-Volumenstroms infolge einer Fluid-Viskositätsänderung entgegenwirken kann,
**dadurch gekennzeichnet, dass** die Betätigungseinrichtung (10) eine Rückstromdrossel (35) zur Verminderung eines Rück-Volumenstromes vom Nehmerzylinder (20) zum Geberzylinder (16) gegenüber einem diesem entgegengesetzt gerichteten Hin-Volumenstrom aufweist, wobei die Rückstromdrossel (35) einen Drosselraum (46) für ein darin zwischen zwei, durch Anschläge (50, 52) definierten Endlagen infolge der Fluidströmung verlagerbaren Drosselkörper (48) umfasst und wobei der Drosselkörper (48) allein oder gemeinsam mit dem Drosselraum (46) Durchlasskanäle (54, 60) aufweist, deren fluiddurchströmter Querschnitt von der eingenommenen Endlage des Drosselkörpers (48) abhängig ist.

2. Hydraulische Betätigungseinrichtung nach Anspruch 1,
**dadurch gekennzeichnet,**
**dass** das Ventilelement (52) bei einer einwirkenden Stellkraft entgegen der Wirkung einer Rückstellkraft eine von einer Ausgangsform oder einer Ausgangslage ausgehende Form- oder Lageänderung erfährt.

3. Hydraulische Betätigungseinrichtung nach Anspruch 2,
**dadurch gekennzeichnet,**
**dass** die Rückstellkraft von einem Rückstellmittel (64) erzeugt wird.

4. Hydraulische Betätigungseinrichtung nach Anspruch 3,
**dadurch gekennzeichnet,**
**dass** das Rückstellmittel (64) als Federelement (64) ausgeführt ist.

5. Hydraulische Betätigungseinrichtung nach einem der Ansprüche 1-4
**dadurch gekennzeichnet,**
**dass** das variable Drosselglied (33a, b) zur Erzeugung des viskositätsabhängigen Druckabfalls einen Fluidkanalabschnitt (84) aufweist, welcher gegenüber demjenigen Fluidkanalabschnitt (68, 72) am Ventilelement (52) eine unterschiedliche Abhängigkeit eines auftretenden Druckabfalls vom Fluid-Volumenstrom aufweist.

6. Hydraulische Betätigungseinrichtung nach Anspruch 5,
**dadurch gekennzeichnet,**
**dass** der Fluidkanalabschnitt (84) als Blende (84) ausgeführt ist.

7. Hydraulische Betätigungseinrichtung nach einem der Ansprüche 1-6,
**dadurch gekennzeichnet,**
**dass** das Ventilelement (52) Fluidkanäle (72) aufweist, deren Öffnungszustand von der Lage des Ventilelementes abhängt.

8. Hydraulische Betätigungseinrichtung nach einem der Ansprüche 1-7,
**dadurch gekennzeichnet,**
**dass** bei einer Form- oder Lageänderung des Ventilelementes (52) der Querschnitt eines Fluid-Bypasses (88) zwischen dem Ventilelement (52) und einem dazu feststehendem Element (66) variiert wird.

9. Hydraulische Betätigungseinrichtung nach einem der Ansprüche 1-8,
**dadurch gekennzeichnet,**
**dass** bei steigender Viskosität durch eine von einer Ausgangslage ausgehenden Form- oder Lageänderung des Ventilelements (52) der Querschnitt des Fluidkanals (27) lokal vergrößert wird.

10. Hydraulische Betätigungseinrichtung nach einem der Ansprüche 1-8,
**dadurch gekennzeichnet,**
**dass** bei fallender Viskosität durch eine von einer Ausgangslage ausgehenden Lageänderung des Ventilelements (52) der Querschnitt des Fluidkanals (27) lokal verringert wird.

11. Hydraulische Betätigungseinrichtung nach einem der Ansprüche 1-10,
**dadurch gekennzeichnet,**
**dass** eine Fluid-Passage mit einem konstanten Querschnitt ausgebildet ist.

12. Hydraulische Betätigungseinrichtung nach einem der Ansprüche 1-11,
**dadurch gekennzeichnet,**
**dass** das Ventilelement (52) einen Anschlag für den Drosselkörper (48) bildet.

13. Hydraulische Betätigungseinrichtung nach einem der Ansprüche 1-12,
**dadurch gekennzeichnet,**
**dass** zumindest ein Element des variablen Drosselgliedes (33a) an der Druckleitung (26), dem Geber- (16) oder dem Nehmerzylinder (20) oder an einem weiteren Funktionselement (29) innerhalb der Betätigungseinrichtung (10) ausgeführt ist.

## Claims

1. Hydraulic actuating device of a motor vehicle clutch, comprising:
- a variable throttle member (33a) having a housing (40) through which a fluid duct (27) extends,
- a slave cylinder (20) and a master cylinder (16),
- a valve element (52) arranged within the fluid duct (27), wherein, when a fluid flow passes from a side, which can be placed in fluid connection with the slave cylinder (20), of the throttle member (33a) to a side, which can be placed in fluid connection with the master cylinder (16), of the throttle member (33a), a viscosity-dependent pressure drop is generated across the valve element (52) and thus an actuation force is generated which acts on the valve element (52), owing to which actuation force the valve element (52) can undergo a change in shape or position in order to locally influence the cross section of the fluid duct (27) and can thus counteract a change in a fluid volume flow as a result of a change in fluid viscosity,
**characterized in that** the actuating device (10) has a return flow throttle (35) for preventing a return volume flow from the slave cylinder (20) to the master cylinder (16) in relation to a forward volume flow in the opposite direction thereto, wherein the return flow throttle (35) comprises a throttle chamber (46) for a throttle body (48) which, under the action of the fluid flow, is displaceable in said throttle chamber between two end positions defined by stops (50, 52), and wherein the throttle body (48) on its own or together with the throttle chamber (46) has passage ducts (54, 60) whose cross section through which fluid flows is dependent on the end position in which the throttle body (48) is situated.

2. Hydraulic actuating device according to Claim 1,
**characterized**
**in that** the valve element (52), under the action of an actuation force counter to the action of a restoring force, undergoes a change in shape or position proceeding from a starting shape or a starting position.

3. Hydraulic actuating device according to Claim 2,
**characterized**
**in that** the restoring force is generated by a restoring means (64).

4. Hydraulic actuating device according to Claim 3,
**characterized**
**in that** the restoring means (64) is in the form of a spring element (64).

5. Hydraulic actuating device according to one of Claims 1-4,
**characterized**
**in that**, to generate the viscosity-dependent pressure drop, the variable throttle member (33a, b) has a fluid duct portion (84) which, in relation to the fluid duct portion (68, 72) on the valve element (52), exhibits a different dependency of a generated pressure drop on the fluid volume flow.

6. Hydraulic actuating device according to Claim 5,
**characterized**
**in that** the fluid duct portion (84) is in the form of an orifice (84).

7. Hydraulic actuating device according to one of Claims 1-6,
**characterized**
**in that** the valve element (52) has fluid ducts (72), the state of opening of which is dependent on the position of the valve element.

8. Hydraulic actuating device according to one of Claims 1-7,
**characterized**
**in that**, in the event of a change in shape or position of the valve element (52), the cross section of a fluid bypass (88) between the valve element (52) and an element (66) that is static with respect thereto is varied.

9. Hydraulic actuating device according to one of Claims 1-8,
**characterized**
**in that**, with increasing viscosity, a change in shape or position of the valve element (52) proceeding from a starting position causes the cross section of the fluid duct (27) to be locally increased in size.

10. Hydraulic actuating device according to one of Claims 1-8,
**characterized**
**in that**, with decreasing viscosity, a change in position of the valve element (52) proceeding from a starting position causes the cross section of the fluid duct (27) to be locally decreased in size.

11. Hydraulic actuating device according to one of Claims 1-10,
**characterized**
**in that** a fluid passage with a constant cross section is formed.

12. Hydraulic actuating device according to one of Claims 1-11,
**characterized**
**in that** the valve element (52) forms a stop for the throttle body (48).

13. Hydraulic actuating device according to one of Claims 1-12,
**characterized**
**in that** at least one element of the variable throttle member (33a) is formed on the pressure line (26), on the master cylinder (16) or the slave cylinder (20) or on a further functional element (29) within the actuating device (10).

## Revendications

1. Dispositif d'actionnement hydraulique d'un embrayage de véhicule automobile, comprenant :
- un organe d'étranglement variable (33a) comprenant un boîtier (40), à travers lequel s'étend un canal fluidique (27),
- un cylindre récepteur (20) et un maître-cylindre (16),
- un élément de soupape (52) disposé à l'intérieur du canal fluidique (27), une chute de pression dépendant de la viscosité et de ce fait une force de réglage agissant sur l'élément de soupape (52) étant générées au niveau de l'élément de soupape (52) dans le cas d'un écoulement fluidique depuis un côté de l'organe d'étranglement (33a) pouvant être amené en liaison fluidique avec le cylindre récepteur (20) jusqu'à un côté de l'organe d'étranglement (33a) pouvant être amené en liaison fluidique avec le maître-cylindre (16), par le biais de laquelle force de réglage l'élément de soupape (52) peut effectuer une variation de forme ou de position pour influencer localement la section transversale du canal fluidique (27) et de ce fait peut agir à l'encontre d'une variation d'un débit volumique de fluide suite à une variation de viscosité du fluide,
**caractérisé en ce que** le dispositif d'actionnement (10) présente un étranglement de retour (35) destiné à éviter un débit volumique de retour depuis le cylindre récepteur (20) jusqu'au maître-cylindre (16) par rapport à un débit volumique aller orienté en sens inverse de celui-ci, l'étranglement de retour (35) comprenant un espace d'étranglement (46) pour un corps d'étranglement (48) pouvant être déplacé dans celui-ci suite à l'écoulement fluidique entre deux positions de fin de course définies par des butées (50, 52), et le corps d'étranglement (48), seul ou conjointement avec l'espace d'étranglement (46), présentant des canaux de passage (54, 60), dont la section transversale traversée par le fluide dépend de la position de fin de course adoptée par le corps d'étranglement (48).

2. Dispositif d'actionnement hydraulique selon la revendication 1,
**caractérisé en ce que**
l'élément de soupape (52), dans le cas d'une force de réglage agissant à l'encontre de l'effet d'une force de rappel, subit une variation de forme ou de position par rapport à une forme de départ ou à une position de départ.

3. Dispositif d'actionnement hydraulique selon la revendication 2,
**caractérisé en ce que**
la force de rappel est produite par un moyen de rappel (64).

4. Dispositif d'actionnement hydraulique selon la revendication 3,
**caractérisé en ce que**
le moyen de rappel (64) est réalisé sous forme d'élément de ressort (64).

5. Dispositif d'actionnement hydraulique selon l'une quelconque des revendications 1 à 4,
**caractérisé en ce que**
l'organe d'étranglement variable (33a, b) présente, pour produire la chute de pression dépendant de la viscosité, une portion de canal fluidique (84) qui, par rapport à la portion de canal fluidique (68, 72) au niveau de l'élément de soupape (52), présente une dépendance différente par rapport à une chute de pression du débit volumique de fluide se produisant.

6. Dispositif d'actionnement hydraulique selon la revendication 5,
**caractérisé en ce que**
la portion de canal fluidique (84) est réalisée sous forme de diaphragme (84).

7. Dispositif d'actionnement hydraulique selon l'une quelconque des revendications 1 à 6,
**caractérisé en ce que**
l'élément de soupape (52) présente des canaux fluidiques (72) dont l'état d'ouverture dépend de la position de l'élément de soupape.

8. Dispositif d'actionnement hydraulique selon l'une quelconque des revendications 1 à 7,
**caractérisé en ce que**
dans le cas d'une variation de forme ou de position de l'élément de soupape (52), la section transversale d'une dérivation fluidique (88) entre l'élément de soupape (52) et un élément (66) fixé par rapport à celui-ci varie.

9. Dispositif d'actionnement hydraulique selon l'une quelconque des revendications 1 à 8,
**caractérisé en ce que**
dans le cas d'une augmentation de la viscosité par une variation de forme ou de position de l'élément de soupape (52) à partir d'une position de départ, la section transversale du canal fluidique (27) est augmentée localement.

10. Dispositif d'actionnement hydraulique selon l'une quelconque des revendications 1 à 8,
**caractérisé en ce que**
dans le cas d'une chute de la viscosité par une variation de position de l'élément de soupape (52) à partir d'une position de départ, la section transversale du canal fluidique (27) est réduite localement.

11. Dispositif d'actionnement hydraulique selon l'une quelconque des revendications 1 à 10,
**caractérisé en ce**
**qu'**un passage fluidique est réalisé avec une section transversale constante.

12. Dispositif d'actionnement hydraulique selon l'une quelconque des revendications 1 à 11,
**caractérisé en ce que**
l'élément de soupape (52) forme une butée pour le corps d'étranglement (48).

13. Dispositif d'actionnement hydraulique selon l'une quelconque des revendications 1 à 12,
**caractérisé en ce**
**qu'**au moins un élément de l'organe d'étranglement variable (33a) est réalisé au niveau de la conduite de pression (26), du maître-cylindre (16) ou du cylindre récepteur (20) ou au niveau d'un élément fonctionnel supplémentaire (29) à l'intérieur du dispositif d'actionnement (10).
